(19) Europäisches Patentamt / European Patent Office / Office européen des brevets

(11) **EP 3 300 292 B1**

(12) **FASCICULE DE BREVET EUROPEEN**

(45) Date de publication et mention de la délivrance du brevet:
**03.07.2019 Bulletin 2019/27**

(51) Int Cl.:
**H04L 9/00** (2006.01)　　　　**H04L 9/06** (2006.01)
**G06F 21/62** (2013.01)

(21) Numéro de dépôt: **17192283.4**

(22) Date de dépôt: **21.09.2017**

(54) **PROCÉDÉ DE CHIFFREMENT OU DE DÉCHIFFREMENT PROTÉGÉ CONTRE DES ATTAQUES PAR CANAUX CACHÉS**

GESCHÜTZTES CHIFFRIER- UND DECHIFFRIERSYSTEM GEGEN ANGRIFFE ÜBER VERSTECKTE KANÄLE

ENCRYPTION OR DECRYPTION METHOD PROTECTED AGAINST SIDE CHANNEL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2016 FR 1658874**

(43) Date de publication de la demande:
**28.03.2018 Bulletin 2018/13**

(73) Titulaire: **Idemia Identity & Security France**
**92400 Courbevoie (FR)**

(72) Inventeurs:
• **MAGHREBI, Houssem**
**92130 Issy Les Moulineaux (FR)**
• **DABOSVILLE, Guillaume**
**92130 Issy Les Moulineaux (FR)**
• **PROUFF, Emmanuel**
**92130 Issy Les Moulineaux (FR)**

(74) Mandataire: **Regimbeau**
**20, rue de Chazelles**
**75847 Paris Cedex 17 (FR)**

(56) Documents cités:
**EP-A1- 1 587 237　　　EP-A2- 2 675 103**
**US-A1- 2011 103 584**

**Description**

**DOMAINE DE L'INVENTION**

La présente invention se rapporte au domaine des procédés de chiffrement symétriques par blocs.

**ETAT DE LA TECHNIQUE**

Le procédé de chiffrement DES (« Data Encryption Standard ») est un procédé connu de chiffrement symétrique par bloc utilisant une clé secrète. On connaît également le procédé de chiffrement TDES (« Triple DES »), comprenant plusieurs chiffrements DES.

Un tel chiffrement est mis en oeuvre en plusieurs tours (ou « rounds » en anglais), chaque tour utilisant une clé de tour.

Les clés de tours sont générées à partir de la clé secrète au cours d'un « cadencement de clés » (« key schedule » en anglais).

Chaque clé de tour générée au cours d'un tour pour chiffrer des données qui dépendent d'un bloc de données d'entrée à chiffrer ou déchiffrer.

Le document US 2011/0103584 décrit notamment un procédé de chiffrement comprenant les étapes qui précèdent. Il est par ailleurs fait mention d'un algorithme DES dans le document EP 2 675 103.

Un tel procédé de chiffrement peut être implémenté dans un dispositif de plusieurs manières.

Dans une première implémentation, toutes les clés de tour sont calculées avant la mise en oeuvre des tours de chiffrements.

Dans une deuxième implémentation, moins consommatrice en mémoire, les clés de tours sont calculées « à la demande ». Selon cette deuxième implémentation, une clé de tour $k_r$ est générée avant son utilisation au cours d'un tour de chiffrement d'indice r, puis une clé suivante $k_{r+1}$ est générée avant son utilisation au cours d'un tour de chiffrement suivant d'indice r + 1.

Un dispositif mettant en oeuvre un procédé de chiffrement ou déchiffrement DES peut être sujet à des attaques physiques dites « attaques par canaux cachés » (« Side-Channel Attack » en anglais). Une attaque par canaux cachés consiste à surveiller le comportement physique du dispositif (consommation électrique en courant, rayonnement électromagnétique, etc...) pendant l'exécution d'un algorithme embarqué dans le dispositif. L'information obtenue par une telle surveillance peut être exploitée par la suite pour déterminer la clé secrète utilisée au cours du chiffrement ou déchiffrement DES.

Il est ainsi tout à fait possible que, dans le cas de la deuxième implémentation, les deux clés $k_r$ et $k_{r+1}$ soient successivement interceptées par un attaquant, par exemple lorsque ces données passent successivement par une même zone physique du dispositif (un registre mémoire spécial mis à disposition de l'algorithme mettant en oeuvre les tours de chiffrements, des fils d'un bus de communication par lesquelles transitent des signaux véhiculant les clés de tour, etc.). L'attaquant peut observer la distance de Hamming entre les clés $k_r$ et $k_{r+1}$. Cette distance est égale au nombre de bits de valeur 1 dans le résultat de la disjonction exclusive (opération XOR) des deux clés, ce résultat étant conventionnellement noté ($k_r \oplus k_{r+1}$), et l'aider à déterminer la clé secrète.

Pour protéger un dispositif mettant en oeuvre un chiffrement ou déchiffrement DES, a été proposé de masquer chaque clé de tour produite par le cadencement de clé à l'aide d'un masque prédéterminé M. Le masque M utilisé est le même pour toutes les clés de tour.

Les masquages respectifs des clés de tour $k_r$ et $k_{r+1}$ sont mis en oeuvre via les calculs suivants :

$$k_r' = k_r \oplus M$$

$$k_{r+1}' = k_{r+1} \oplus M$$

Cependant, un tel masquage ne permet pas de protéger efficacement un dispositif mettant en oeuvre un chiffrement DES selon la deuxième implémentation.

En effet, les égalités suivantes sont vérifiées lors de la mise en oeuvre du masquage des clés de tour clés $k_r$ et $k_{r+1}$ au moyen du masque M :

$$HD(k_r', k_{r+1}') = HD(k_r, k_{r+1}) = k_r \oplus M \oplus k_{r+1} \oplus M = k_r \oplus k_{r+1}$$

où $HD(x, y)$ est la distance de Hamming entre x et y.

Ainsi, le masquage proposé ne change absolument pas la distance de Hamming observable par un attaquant entre les clés $k_r$ et $k_{r+1}$.

Il est par ailleurs connu d'implémenter certains procédés de chiffrement DES de sorte qu'ils respectent la propriété suivante :

$$B' = DES(B, K)$$

$$\bar{B}' = DES(\bar{B}, \bar{K})$$

c'est-à-dire que si le chiffrement DES d'un bloc de données B au moyen de la clé secrète K produisant le bloc de sortie B', alors le chiffrement DES du complément à un $\bar{B}$ du bloc de données B au moyen du complément à un $\bar{K}$ de la clé secrète K produit le complément à un $\bar{B}$' du bloc de sortie B'. Cette propriété permet de défendre le dispositif mettant en oeuvre chiffrement DES contre des attaques par canaux cachées de type « safe-error ».

Toutefois, cette propriété s'avère inefficace pour protéger le chiffrement DES contre des attaques par canaux cachés du type « par modèle » (« template attacks »). En effet, l'utilisation d'une clé complémentée ou pas, tout au long d'un chiffrement DES, n'empêche toujours pas de monter une telle attaque car :

$$HD(\overline{k_r}, \overline{k_{r+1}}) = HD(k_r, k_{r+1}) = k_r \oplus (1 \dots 1) \oplus k_{r+1} \oplus (1 \dots 1) = k_r \oplus k_{r+1}$$

## EXPOSE DE L'INVENTION

Un but de l'invention est de renforcer la protection d'un procédé de chiffrement/déchiffrement comprenant le calcul de clés de tours « à la demande » contre des attaques par canaux cachés.

Il est dès lors proposé un procédé de chiffrement ou de déchiffrement d'un bloc de données à partir d'une clé secrète, le procédé comprenant des étapes de :

- génération d'une première clé de tour dépendant de la clé secrète,
- calcul de la disjonction exclusive de la première clé de tour et d'un premier masque), de sorte à produire une première clé masquée,
- mise en oeuvre d'un tour de chiffrement appliqué à deux premières données dépendant du bloc de données, à l'aide de la première clé de tour masquée, de sorte à produire deux deuxièmes données,
- après l'étape produisant la première clé masquée, génération d'une deuxième clé de tour dépendant de la clé secrète,
- calcul de la disjonction exclusive de la deuxième clé de tour et d'un deuxième masque), de sorte à produire une deuxième clé masquée,
- sélection du premier masque) et du deuxième masque) parmi un masque de bits tous à un et un masque de bits tous nuls,
- calcul de la disjonction exclusive de l'une des deuxièmes données et du premier masque) et du deuxième masque), et calcul de la disjonction exclusive de l'autre deuxième donnée et du premier masque) et du deuxième masque), de sorte à produire deux troisièmes données,
- mise en oeuvre d'un tour suivant de chiffrement appliqué aux deux troisièmes données à l'aide de la deuxième clé de tour masquée.

Comme le premier masque et le deuxième masque sont chacun susceptibles d'être soit le masque de bits tous à un soit le masque de bits tous nuls, quatre modifications différentes de valeur de clé de tour peuvent survenir entre les deux tours de chiffrements.

Un attaquant scrutant les différences entre la première clé de tour et la deuxième clé de tour générée ultérieurement est face à une incertitude qui l'empêche de déterminer si, entre les deux tours, le changement de valeur d'un bit de rang $j$ résulte de la différence entre le bit de rang $j$ de la première clé de tour et entre le bit de rang $j$ de la deuxième clé de tour, ou s'il résulte de la différence entre le premier masque et le deuxième masque. L'attaquant ne peut donc pas déduire d'information lui permettant de deviner les clés de tour et par conséquent la clé secrète K dont elles dépendent, en observant les différences entre les clés de tours successivement générées.

Par ailleurs, la correction mise en oeuvre entre les deux tours de chiffrement permet d'adapter les tours de chiffrements aux clés de tours masquées au moyen des premier et deuxième masques.

Le procédé peut être également complété à l'aide des caractéristiques optionnelles suivantes, prises seules ou en combinaison lorsque cela est techniquement possible.

Le procédé peut comprendre la génération d'une pluralité de clé de tours, et comprendre une pluralité de tours de chiffrements successifs, une clé de tour étant générée avant chaque tour de chiffrement, et dans lequel :

- pour chaque clé de tour générée,

  ○ un masque associé à la clé de tour est sélectionné, et
  ○ la disjonction exclusive de la clé de tour et du masque associé est calculée de sorte à produire une clé masquée,

- la correction est mise en oeuvre entre chaque paire de tours de chiffrement successifs.

La sélection d'au moins un - ou chaque - masque peut être mise en oeuvre avant la pluralité de tours de chiffrement et/ou avant la génération de la pluralité de clés de tours.

La sélection est par exemple aléatoire.

La sélection peut être adaptée pour que le masque de bits tous à un et le masque de bits tous nuls soient sélectionnés de manière équiprobable.

Le procédé peut comprendre en outre la génération d'un nombre ayant une pluralité de bits, chaque clé de tour étant associée à l'un des bits, et dans lequel le masque sélectionné pour masquer une clé de tour est :

- le masque de bits tous à un si le bit associé à la clé de tour a une première valeur,
- le masque de bits tous nuls si le bit associé à la clé de tour a une deuxième valeur différente de la première valeur.

Le tour de chiffrement appliqué aux deux premières données peut comprendre en outre

- l'application d'une fonction de chiffrement à l'une des deux premières données à l'aide de la première clé de tour masquée, de sorte à produire une donnée intermédiaire, la première donnée formant par ailleurs une des deux deuxièmes données,
- calcul de la disjonction exclusive de la donnée intermédiaire et de l'autre première donnée, de sorte à produire l'autre deuxième donnée.

Il est en outre proposé, selon un deuxième aspect de l'invention, un produit programme d'ordinateur comprenant des instructions de code de programme pour l'exécution des étapes du procédé qui précède, lorsque ce programme est exécuté par au moins un processeur.

Il est également proposé, selon un troisième aspect de l'invention, un dispositif de chiffrement ou de déchiffrement d'un bloc de données à partir d'une clé secrète, le dispositif au moins un processeur configuré pour:

- générer une première clé de tour dépendant de la clé secrète,
- calculer la disjonction exclusive de la première clé de tour et d'un premier masque), de sorte à produire une première clé masquée,
- mettre en oeuvre un tour de chiffrement appliqué à deux premières données dépendant du bloc de données, à l'aide de la première clé de tour masquée, de sorte à produire deux deuxièmes données,
- après que la première clé masquée est produite, générer une deuxième clé de tour dépendant de la clé secrète,
- calculer la disjonction exclusive de la deuxième clé de tour et d'un deuxième masque), de sorte à produire une deuxième clé masquée,
- sélectionner le premier masque) et le deuxième masque) parmi un masque de bits tous à un et un masque de bits tous nuls,
- calculer de la disjonction exclusive de l'une des deuxièmes données et du premier masque) et du deuxième masque), et calcul de la disjonction exclusive de l'autre deuxième donnée et du premier masque) et du deuxième masque), de sorte à produire deux troisièmes données,
- mettre en oeuvre un tour suivant de chiffrement appliqué aux deux troisièmes données à l'aide de la deuxième clé de tour masquée.

Le dispositif de chiffrement ou de déchiffrement selon le troisième aspect de l'invention peut être compris dans une carte à puce.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente de manière schématique un dispositif de chiffrement ou de déchiffrement.
- Les figure 2, 3 et 4 représentent de manière schématique des étapes d'un procédé de chiffrement ou déchiffrement, selon un mode de réalisation de l'invention.

Sur l'ensemble des figures, les éléments similaires portent des références identiques.

**DESCRIPTION DETAILLEE DE L'INVENTION**

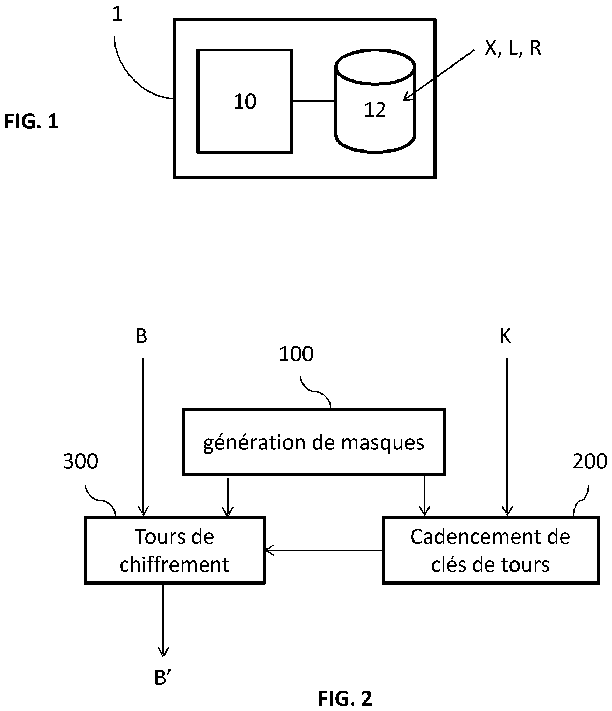

En référence à la **figure 1,** un dispositif de chiffrement 1 comprend au moins un processeur 10 et au moins une mémoire 12.

Le processeur 10 est configuré pour exécuter un programme de chiffrement/symétrique par blocs.

La mémoire 12 est configurée pour mémoriser des données utilisées par ce programme.

En particulier, la mémoire 12 comprend une unité mémoire non volatile qui mémorise des données qui seront utilisées lors de chaque exécution du programme. Ces données comprennent notamment deux tables de permutation PC1 et PC2.

L'unité mémoire non volatile est de type HDD, SSD, Flash, etc.

La mémoire 12 comprend par ailleurs une unité mémoire volatile (par exemple de type RAM). L'unité mémoire volatile a vocation à mémoriser temporairement des données générées par le processeur 10.

L'unité mémoire volatile comprend notamment trois registres mémoires : un premier registre X, un registre de gauche L, et un registre de droite R.

Par exemple, le dispositif de chiffrement 1 est une carte à puce, un composant de carte à puce, ou comprend une carte à puce (carte bancaire, etc).

En référence à la **figure** 2, un procédé de chiffrement DES comprend les étapes suivantes.

Le procédé de chiffrement prend en entrée un bloc de données B à chiffrer et une clé secrète K et produit un bloc de données chiffrées B'.

Le processeur 10 met en oeuvre, de façon conventionnelle :

- un cadencement de clés 200 (« key schedule ») générant $n$ clés de tour $k_1$, ..., $k_r$, ..., $k_n$ à partir de la clé secrète K ;
- une succession de n tours de chiffrements 300, chaque tour utilisant une des clés de tour générées.

*Sélection de masques*

Par ailleurs, de façon non conventionnelle, sont mémorisées dans l'unité non volatile de la mémoire 12 deux masques binaires prédéterminés : un masque dont les bits sont tous de valeur 1, dit masque « tout-à-1 », et un masque binaire dont tous les bits sont nuls, dit masque nul.

Chacun des deux masques binaires a un nombre de bits égal au nombre de bits du bloc B à chiffrer.

Dans une étape 100, le processeur 10 sélectionne n masques binaires parmi les deux masques binaires prédéterminés, les masques sélectionnés étant notés $(-b_1),..., (-b_r), ..., (-b_n)$. En d'autres termes, chaque masque binaire $(-b_r)$ n'est susceptible d'être que le masque « tout-à-1 » ou que le masque nul.

Comme on le verra dans la suite, le masque binaire $(-b_r)$ est associé à la clé de tour $k_r$.

Chaque masque binaire $(-b_r)$ est sélectionné aléatoirement, par exemple selon une loi uniforme de sorte que la sélection de chacun des deux masques « tout-à-1 » et nul soient équiprobables.

La sélection 100 des masques binaires est de préférence mise en oeuvre avant la succession de tours de chiffrement 300 et/ou avant le cadencement de clés 200 générant les n clés de tour.

Par exemple, la sélection 100 des masques binaires comprend un appel par le processeur à une fonction qui tire aléatoirement un nombre ayant au moins $n$ bits. Chaque bit du nombre tiré est associé à l'une des clés de tour: le r-ième bit en partant de la droite (ou de la gauche) du nombre tiré, noté $b_r$, est par exemple associé à la clé $k_r$.

Lorsque le masque $(-b_r)$ est à utiliser dans un calcul, le processeur lit la valeur du bit $b_r$ du nombre qui a été tiré préalablement. En fonction de cette valeur, le processeur charge le masque « tout-à-1 » ou le masque nul qui sont pré-mémorisés. Par exemple :

- le processeur charge le masque « tout-à-1 » si $b_r = 1$, et
- le processeur charge le masque nul si $b_r = 0$,

ou vice-versa.

Avec une telle méthode de sélection, il n'est pas nécessaire de mémoriser les n masques sélectionnés en sus du masque « tout-à-1 » et du masque nul. Seul le nombre de n bits tiré aléatoirement est à mémoriser, ce qui permet une économie de consommation mémoire.

Bien entendu, d'autres méthodes sont envisageables pour générer chaque masque binaire ($-b_r$). Selon l'une d'entre elles, le processeur 10 génère le masque ($-b_r$) en calculant le résultat de $b_r$ - 1. Si $b_r$ vaut zéro le processeur 10 obtient -1 = 11111111 (sur un octet) en représentation signée, et donc le masque binaire de bits tous à 1, et si $b_r$ vaut 1 alors le processeur 10 obtient 0 = 00000000 (sur un octet), donc le masque binaire nul.

*Cadencement de clés de tour*

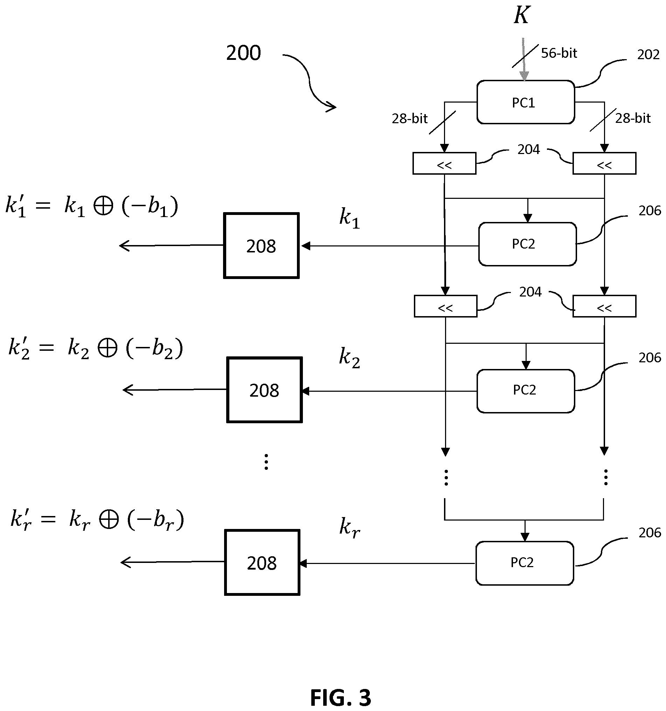

En référence à la **figure 3**, le cadencement 200 de clés comprend les étapes suivantes.

Dans une étape 202, le processeur 10 met en oeuvre une permutation sur au moins une portion de la clé secrète K, et ce au moyen de la première table de permutation PC1.

La clé secrète K a typiquement 64 bits dont 56 bits de base apportant de l'entropie à la clé secrète K et 8 bits supplémentaires de redondance n'apportant pas d'entropie à la clé secrète K. La portion de la clé K faisant l'objet de la permutation 100 est formée par les 56 bits de base, et la permutation 100 produit des données binaires ayant une longueur cumulée de 56 bits également.

Le résultat de la permutation 202 est scindé en deux données binaires initiales : les 28 bits de poids fort de ce résultat et les 28 bits de faible de ce résultat.

Le procédé met ensuite en oeuvre une pluralité d'itérations, chaque itération produisant une clé de tour.

L'itération d'indice *r* produisant la clé $k_r$ comprend les étapes suivantes.

Dans une étape 204, le processeur 10 met en oeuvre une rotation appliquée à des données initiales qui dépendent de la clé secrète K, de sorte à produire deux données binaires décalées d'un certain nombre de bits (par exemple rotation vers la gauche).

Dans la première itération, les données auxquelles la rotation est appliquée sont les données binaires produites par la permutation 202. Dans une itération de référence d'indice *r* qui n'est pas la première itération, les données initiales sont produites par l'itération d'indice *r* - 1 précédant l'itération de référence d'indice *r*.

Dans une étape 206, le processeur 10 permute les données binaires décalées au moyen de la table PC2, de sorte à produire la clé de tour $k_r$. Plus précisément, la permutation 104 est mise en oeuvre sur la concaténation des deux données binaires décalées.

La clé de tour $k_r$ est par exemple mémorisée dans le premier registre mémoire X, ce registre étant commun à toutes les itérations.

Dans une étape 106, le processeur 10 met en oeuvre un masquage 208 de la clé de tour. Ce masquage 208 est réalisé par le calcul de la disjonction exclusive de la clé de tour $k_r$ et du masque ($-b_r$) sélectionné. Le résultat $k_r \oplus$ ($-b_r$) de ce masquage 208 constitue une clé masquée $k'_r$.

La clé masquée $k'_r$ est par exemple mémorisée dans le premier registre mémoire X en lieu et place de la clé de tour $k_r$.

Les étapes 204, 206, 208 sont répétées au cours de chaque itération du cadencement de clés 200. Les données auxquelles l'étape de rotation 204 d'une itération n'étant pas la première itération sont mises en oeuvre sur les données décalées au cours de l'itération précédente.

*Tours de chiffrements DES*

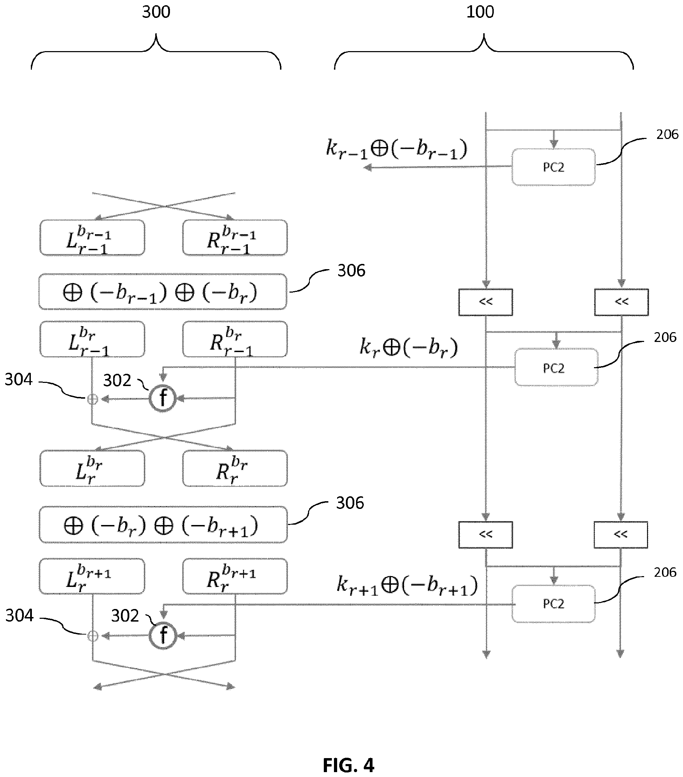

En référence à la figure 4, dans la pluralité de tours de chiffrement 300, chaque tour de chiffrement utilise l'une des clés de tour générée au cours du cadencement de clés.

Une clé de tour masquée est générée avant chaque tour de chiffrement. En particulier, comme indiqué précédemment, la clé de tour masquée $k_r$' est mémorisée dans le premier registre mémoire X avant son utilisation au cours du tour de chiffrement d'indice *r*, et la clé de tour masquée suivante $k_{r+1}$' est mémorisée dans le même premier registre mémoire X avant son utilisation au cours d'un tour de chiffrement suivant d'indice r + 1.

Par ailleurs, la pluralité de tours de chiffrements 300 utilise le registre de droite R et le registre de gauche L.

Un tour de chiffrement d'indice r comprend les sous-étapes suivantes.

On suppose qu'une donnée $L_{r-1}^{b_r}$ dépendant du bloc de données d'entrée B est a été mémorisée dans le registre de gauche L. Similairement, une donnée notée $R_{r-1}^{b_r}$ dépendant également du bloc de données B a été mémorisée dans le registre de droite R.

Le tour de chiffrement d'indice r est appliqué aux données $L_{r-1}^{b_r}$ et $R_{r-1}^{b_r}$ et utilise par ailleurs la clé de tour masquée $k_r' = k_r \oplus (-b_r)$.

Le processeur 10 applique 302 une fonction de chiffrement *f* prédéterminée à la donnée $R_{r-1}^{b_r}$ contenue dans le registre de droite R à l'aide de la clé de tour masquée $k_r'$, de sorte à produire une donnée intermédiaire $f(R_{r-1}^{b_r}, k_r')$. La fonction de chiffrement *f* prédéterminée est connue en elle-même.

Le processeur 10 calcule 304 la disjonction exclusive de la donnée intermédiaire et de la donnée $L_{r-1}^{b_r}$ contenue dans le registre de gauche L. Le résultat de ce calcul 304 est ensuite mémorisé dans le registre de droite R et est noté $R_r^{b_r}$.

Par ailleurs, le processeur copie la donnée $R_{r-1}^{b_r}$ dans le registre de gauche L.

A la fin du tour de chiffrement d'indice r on a en définitive :

$$L_r^{b_r} = R_{r-1}^{b_r}$$

$$R_r^{b_r} = L_{r-1}^{b_r} \oplus f\left(R_{r-1}^{b_r}, k_r \oplus (-b_r)\right)$$

Dans un procédé de chiffrement ou déchiffrement DES conventionnel, un tour de chiffrement suivant (d'indice r + 1) serait appliqué directement aux données $R_r^{b_r}$ et $L_r^{b_r}$.

Toutefois, dans le cadre de la présente invention, et de façon non-conventionnelle, les deuxièmes données $R_r^{b_r}$ et $L_r^{b_r}$ font l'objet d'une correction 306 avant leur utilisation au cours du tour de chiffrement suivant d'indice r+1.

La correction 306 comprend les calculs suivants :

$$R_r^{b_{r+1}} = R_r^{b_r} \oplus (-b_{r-1}) \oplus (-b_r)$$

$$L_r^{b_{r+1}} = L_r^{b_r} \oplus (-b_{r-1}) \oplus (-b_r)$$

Le tour de chiffrement suivant d'indice r + 1 est appliqué à aux deux données corrigées $R_r^{b_{r+1}}$ et $L_r^{b_{r+1}}$, et utilise par ailleurs la clé de tour $k_{r+1}$. Ce tour suivant comprend les mêmes étapes que celles décrites précédemment:

- l'application 302 de la fonction de chiffrement f à la donnée corrigée $R_r^{b_{r+1}}$, à l'aide de la clé de tour masquée $k_{r+1}' = k_{r+1} \oplus (-b_{r+1})$, de sorte à produire une nouvelle donnée intermédiaire ;

- le calcul 304 la disjonction exclusive de la nouvelle donnée intermédiaire et de la donnée corrigée $L_r^{b_{r+1}}$, de sorte à produire la donnée $R_{r+1}^{b_{r+1}}$.

Les mêmes étapes sont mises en oeuvre au cours de chacun des n tours de chiffrements. Pour chaque clé de tour générée, la correction 306 est mise en oeuvre entre chaque paire de tours de chiffrement successifs.

Le chiffrement DES étant symétrique, un bloc de données est déchiffré au moyen de la même clé secrète K et des mêmes étapes que celles du procédé de chiffrement DES décrit précédemment.

On remarque qu'au cours du procédé de chiffrement décrit, la mémorisation dans le premier registre mémoire X de la clé de tour en clair $k_r$ mise en oeuvre au cours d'une itération d'indice *r* du cadencement de clés (n'étant pas la première itération) écrase la clé masquée $k_{r-1}' = k_{r-1} \oplus (-b_{r-1})$ mémorisée au cours de l'itération précédente d'indice *r* - 1 du cadencement de clés.

Comme les masques $(-b_{r-1})$ et $(-b_r)$ sont chacun susceptibles d'être soit le « masque tout-à-un » soit le masque nul, quatre cas différents peuvent se présenter :

- $b_{r-1}$ = 0 et $b_r$ = 0, ou
- $b_{r-1}$ = 1 et $b_r$ = 0, ou
- $b_{r-1}$ = 0 et $b_r$ = 1, ou
- $b_{r-1}$ = 1 et $b_r$ = 1.

En d'autres termes, selon les masques sélectionnés, la modification du contenu du premier registre mémoire X sera différente.

Un attaquant scrutant le contenu du premier registre X est face à une incertitude qui l'empêche de déterminer si le changement de valeur d'un bit de rang $k$ dans le premier registre X résulte de la différence entre le bit de rang k de la clé de tour $k_r$ et la clé de tour $k_{r+1}$, ou s'il résulte de la différence entre les masques $(-b_{r-1})$ et $(-b_r)$. L'attaquant ne peut donc pas déduire d'information lui permettant de deviner les clés de tour et par conséquent la clé secrète K dont elles dépendent, en observant le premier registre X.

Par ailleurs, la correction mise en oeuvre entre deux tours successifs d'indices r et r + 1 permet d'être cohérent avec les valeurs des masques appliqués $(-b_r)$ et $(-b_{r+1})$.

Dans le mode de réalisation de procédé décrit ci-dessus, le registre X servait de point de passage pour les différentes clés de tour générées et peut être scruté par l'attaquant. Il convient cependant de noter que des attaques du même type peuvent bien évidemment être mises en oeuvre même si un tel registre X n'est pas utilisé. L'attaquant peut par exemple observer des signaux qui transitent sur des fils conducteurs du dispositif 1 au cours de l'exécution du (dé)chiffrement DES aux mêmes fins. De façon plus générale, l'invention apporte une protection supplémentaire à tout algorithme de (dé)chiffrement au cours duquel au moins deux clés de tours sont générées successivement, contexte qui suffit à un attaquant pour tenter de remonter à la clé K par examen des différences entre les deux clés générées successivement.

L'invention est en outre généralisable d'autres procédés de (dé)chiffrement symétrique par blocs, par exemple le procédé de chiffrement TDES.

## Revendications

**1.** Procédé de chiffrement ou de déchiffrement d'un bloc de données (B) à partir d'une clé secrète (K), le procédé comprenant des étapes de :

- génération (206) d'une première clé de tour ($k_r$) dépendant de la clé secrète (K),
- calcul (208) de la disjonction exclusive de la première clé de tour ($k_r$) et d'un premier masque (($-b_r$)), de sorte à produire une première clé masquée ($k_r$'),

- mise en oeuvre d'un tour de chiffrement appliqué à deux premières données ( $L_{r-1}^{b_r}$, $R_{r-1}^{b_r}$ ) dépendant du bloc de données (B), à l'aide de la première clé de tour masquée ($k_r$'), de sorte à produire deux deuxièmes données $(L_r^{b_r}, R_r^{b_r})$,

- après l'étape (208) produisant la première clé masquée ($k_r$'), génération (206) d'une deuxième clé de tour ($k_{r+1}$) dépendant de la clé secrète (K),
- calcul (208) de la disjonction exclusive de la deuxième clé de tour ($k_{r+1}$) et d'un deuxième masque (($-b_{r+1}$)), de sorte à produire une deuxième clé masquée ($k_{r+1}$'),

le procédé étant **caractérisé par** des étapes de :

- sélection (100) du premier masque (($-b_r$)) et du deuxième masque (($-b_{r+1}$)) parmi un masque de bits tous à un et un masque de bits tous nuls,

- calcul (306) de la disjonction exclusive de l'une des deuxièmes données $(R_r^{b_r})$ et du premier masque (($-b_r$)) et du deuxième masque (($-b_{r+1}$)), et calcul de la disjonction exclusive de l'autre deuxième donnée $(L_r^{b_r})$ et du premier masque (($-b_r$)) et du deuxième masque (($-b_{r+1}$)), de sorte à produire deux troisièmes données $(L_r^{b_{r+1}}, R_r^{b_{r+1}})$,

- mise en oeuvre d'un tour suivant de chiffrement appliqué aux deux troisièmes données $(L_r^{b_{r+1}}, R_r^{b_{r+1}})$ à l'aide de la deuxième clé de tour masquée ($k_{r+1}$').

**2.** Procédé selon la revendication précédente, comprenant la génération (200) d'une pluralité de clé de tours, et une pluralité (300) de tours de chiffrements successifs, une clé de tour étant générée avant chaque tour de chiffrement, et dans lequel :

  • pour chaque clé de tour générée,

    ◦ un masque associé à la clé de tour est sélectionné (100), et
    ◦ la disjonction exclusive de la clé de tour et du masque associé est calculée (208) de sorte à produire une clé masquée,

  • la correction (306) est mise en oeuvre entre chaque paire de tours de chiffrement successifs.

**3.** Procédé selon la revendication précédente, dans lequel la sélection (100) de chaque masque est mise en oeuvre avant la pluralité (300) de tours de chiffrement et/ou avant la génération (200) de la pluralité de clés de tours.

**4.** Procédé selon l'une des revendications précédentes, dans lequel la sélection (100) est aléatoire.

**5.** Procédé selon l'une des revendications précédentes, dans lequel la sélection (100) est adaptée pour que le masque de bits tous à un et le masque de bits tous nuls soient sélectionnés de manière équiprobable.

**6.** Procédé selon l'une des revendications précédentes, comprenant la génération d'un nombre ayant une pluralité de bits, chaque clé de tour étant associée à l'un des bits, et dans lequel le masque sélectionné pour masquer une clé de tour est :

  • le masque de bits tous à un si le bit associé à la clé de tour a une première valeur,
  • le masque de bits tous nuls si le bit associé à la clé de tour a une deuxième valeur différente de la première valeur.

**7.** Procédé selon l'une des revendications précédentes, dans lequel le tour de chiffrement appliqué aux deux premières données comprend :

  • l'application (302) d'une fonction de chiffrement (f) à l'une des deux premières données à l'aide de la première clé de tour masquée ($k_r'$), de sorte à produire une donnée intermédiaire, la première donnée formant par ailleurs une des deux deuxièmes données,
  • calcul (304) de la disjonction exclusive de la donnée intermédiaire et de l'autre première donnée, de sorte à produire l'autre deuxième donnée.

**8.** Produit programme d'ordinateur comprenant des instructions de code de programme pour l'exécution des étapes du procédé selon l'une des revendications précédentes, lorsque ce programme est exécuté par au moins un processeur (10).

**9.** Dispositif (1) de chiffrement ou de déchiffrement d'un bloc de données (B) à partir d'une clé secrète (K), le dispositif (1) au moins un processeur (10) configuré pour:

  • générer (206) une première clé de tour ($k_r$) dépendant de la clé secrète (K),
  • calculer (208) la disjonction exclusive de la première clé de tour ($k_r$) et d'un premier masque ($(-b_r)$), de sorte à produire une première clé masquée ($k_r'$),

  • mettre en oeuvre un tour de chiffrement appliqué à deux premières données ( $L_{r-1}^{b_r}$, $R_{r-1}^{b_r}$ ) dépendant du bloc de données (B), à l'aide de la première clé de tour masquée ($k_r'$), de sorte à produire deux deuxièmes données ($L_r^{b_r}$, $R_r^{b_r}$),

  • après que la première clé masquée ($k_r'$) est produite, générer (206) une deuxième clé de tour ($k_{r+1}$) dépendant de la clé secrète (K),
  • calculer (208) la disjonction exclusive de la deuxième clé de tour ($k_{r+1}$) et d'un deuxième masque ($(-b_{r+1})$), de sorte à produire une deuxième clé masquée ($k_{r+1}'$),

le dispositif étant **caractérisé en ce que** le processeur (10) est en outre configuré pour :

9

• sélectionner (100) le premier masque ((-$b_r$)) et le deuxième masque ((-$br_{+1}$)) parmi un masque de bits tous à un et un masque de bits tous nuls,

• calculer (306) de la disjonction exclusive de l'une des deuxièmes données $(R_r^{b_r})$ et du premier masque ((-$b_r$)) et du deuxième masque ((-$b_{r+1}$)), et calcul de la disjonction exclusive de l'autre deuxième donnée $(L_r^{b_r})$ et du premier masque ((-$b_r$)) et du deuxième masque ((-$b_{r+1}$)), de sorte à produire deux troisièmes données $(L_r^{b_{r+1}}, R_r^{b_{r+1}})$,

• mettre en oeuvre d'un tour suivant de chiffrement appliqué aux deux troisièmes données à l'aide de la deuxième clé de tour masquée ($k_{r+1}$').

**10.** Carte à puce comprenant un dispositif de chiffrement ou de déchiffrement (1) selon la revendication précédente.

**Patentansprüche**

**1.** Chiffrier- oder Dechiffrierverfahren eines Datensatzes (B) ausgehend von einem Geheimschlüssel (K), wobei das Verfahren die folgenden Schritte umfasst:

• Erzeugen (206) eines ersten Rundenschlüssels ($k_r$) abhängig von dem Geheimschlüssel (K),
• Berechnen (208) der exklusiven Disjunktion des ersten Rundenschlüssels ($k_r$) und einer ersten Maske ((-$b_r$)), um einen ersten maskierten Schlüssel ($k_r$') zu produzieren,

• Umsetzen einer Chiffrierrunde, die auf zwei erste Daten $(L_{r-1}^{br}, R_{r-1}^{br})$ abhängig vom Datensatz (B) angewendet wird, mithilfe des ersten maskierten Rundenschlüssels ($k_r$'), um zwei zweite Daten $(L_r^{br}, R_r^{br})$ zu produzieren,

• nach dem Schritt (208), der den ersten maskierten Schlüssel ($k_r$') produziert, Erzeugen (206) eines zweiten Rundenschlüssels ($k_{r+1}$) abhängig von dem Geheimschlüssel (K),
• Berechnen (208) der exklusiven Disjunktion des zweiten Rundenschlüssels ($k_{r+1}$) und einer zweiten Maske ((-$b_{r+1}$)), um einen zweiten maskierten Schlüssel ($k_{r+1}$') zu produzieren,

wobei das Verfahren durch die folgenden Schritte gekennzeichnet ist:

• Auswählen (100) der ersten Maske ((-$b_r$)) und der zweiten Maske ((-$b_{r+1}$)), aus einer Maske an Bits, alle auf Eins, und einer Maske an Bits, alle auf null,

• Berechnen (306) der exklusiven Disjunktion von einem der zweiten Daten $(R_r^{br})$ und der ersten Maske ((-$b_r$)) und der zweiten Maske ((-$b_{r+1}$)), und Berechnen der exklusiven Disjunktion von dem anderen zweiten Datum $(L_r^{br})$ und der ersten Maske ((-$b_r$)) und der zweiten Maske ((-$b_{r+1}$)), um zwei dritte Daten $(L_r^{br+1}, R_r^{br+1})$ zu produzieren,

• Umsetzen einer folgenden Chiffrierrunde, die mithilfe des zweiten maskierten Rundenschlüssels ($k_{r+1}$') auf die beiden dritten Daten $(L_r^{br+1}, R_r^{br+1})$ angewendet wird.

**2.** Verfahren nach dem vorstehenden Anspruch, das Erzeugen (200) einer Vielzahl eines Rundenschlüssels und eine Vielzahl (300) aufeinanderfolgender Chiffrierrunden umfassend, wobei ein Rundenschlüssel vor jeder Chiffrierrunde erzeugt wird, und wobei:

• für jeden erzeugten Rundenschlüssel,

◦ eine dem Rundenschlüssel zugewiesene Maske ausgewählt (100) wird, und
◦ die exklusive Disjunktion des Rundenschlüssels und der zugewiesenen Maske derart berechnet (208) wird, dass ein maskierter Schlüssel produziert wird,

• die Korrektur (306) zwischen jedem Paar von aufeinanderfolgenden Chiffrierrunden umgesetzt wird.

**3.** Verfahren nach dem vorstehenden Anspruch, wobei die Auswahl (100) einer jeden Maske vor der Vielzahl (300) von Chiffrierrunden und/oder vor dem Erzeugen (200) der Vielzahl von Rundenschlüsseln umgesetzt wird.

**4.** Verfahren nach einem der vorstehenden Ansprüche, wobei die Auswahl (100) zufällig ist.

**5.** Verfahren nach einem der vorstehenden Ansprüche, wobei die Auswahl (100) ausgeführt ist, damit die Maske an Bits, alle auf Eins, und die Maske an Bits, alle auf null mit der gleichen Wahrscheinlichkeit ausgewählt werden.

**6.** Verfahren nach einem der vorstehenden Ansprüche, das Erzeugen einer Anzahl umfassend, die eine Vielzahl von Bits aufweist, wobei jeder Rundenschlüssel einem der Bits zugewiesen ist, und wobei die ausgewählte Maske zum Maskieren eines Rundenschlüssels Folgende ist:

• die Maske an Bits, alle auf Eins, falls das dem Rundenschlüssel zugewiesene Bit einen ersten Wert aufweist,
• die Maske an Bits, alle auf null, falls das dem Rundenschlüssel zugewiesene Bit einen zweiten Wert aufweist, der sich von dem ersten Wert unterscheidet.

**7.** Verfahren nach einem der vorstehenden Ansprüche, wobei die Chiffrierrunde, die auf die beiden ersten Daten angewendet wird, umfasst:

• das Anwenden (302) einer Chiffrierfunktion (f) auf das eine der beiden ersten Daten mithilfe des ersten maskierten Rundenschlüssels ($k_r'$), um ein Zwischendatum zu produzieren, wobei das erste Datum darüber hinaus eines der beiden zweiten Daten bildet,
• Berechnen (304) der exklusiven Disjunktion des Zwischendatums und des anderen ersten Datums, um das andere zweite Datum zu produzieren.

**8.** Computerprogrammprodukt, Programmcodebefehle zum Ausführen der Schritte des Verfahrens nach einem der vorstehenden Ansprüche umfassend, wenn dieses Programm durch mindestens einen Prozessor (10) ausgeführt wird.

**9.** Chiffrier- oder Dechiffriervorrichtung (1) eines Datensatzes (B) ausgehend von einem Geheimschlüssel (K), wobei die Vorrichtung (1) mindestens einen Prozessor (10), konfiguriert zum:

• Erzeugen (206) eines ersten Rundenschlüssels ($k_r$) abhängig von dem Geheimschlüssel (K),
• Berechnen (208) der exklusiven Disjunktion des ersten Rundenschlüssels ($k_r$) und einer ersten Maske (($-b_r$)), um einen ersten maskierten Schlüssel ($k_r'$) zu produzieren,
• Umsetzen einer Chiffrierrunde, die auf zwei erste Daten $(L_{r-1}^{br}, R_{r-1}^{br})$ abhängig vom Datensatz (B) angewendet wird, mithilfe des ersten maskierten Rundenschlüssels ($k_r'$), um zwei zweite Daten $(L_r^{br}, R_r^{br})$ zu produzieren,
• nachdem der erste maskierte Schlüssel ($k_r'$) produziert worden ist, Erzeugen (206) eines zweiten Rundenschlüssels ($k_{r+1}$) abhängig von dem Geheimschlüssel (K),
• Berechnen (208) der exklusiven Disjunktion des zweiten Rundenschlüssels ($k_{r+1}$) und einer zweiten Maske (($-b_{r+1}$)), um einen zweiten maskierten Schlüssel ($k_{r+1}'$) zu produzieren,

wobei die Vorrichtung **dadurch gekennzeichnet ist, dass** der Prozessor (10) weiter konfiguriert ist zum:

• Auswählen (100) der ersten Maske (($-b_r$)) und der zweiten Maske (($-b_{r+1}$)), aus einer Maske an Bits, alle auf Eins, und einer Maske an Bits, alle auf null,
• Berechnen (306) der exklusiven Disjunktion von einem der zweiten Daten $(R_r^{br})$ und der ersten Maske (($-b_r$)) und der zweiten Maske (($-b_{r+1}$)), und Berechnen der exklusiven Disjunktion von dem anderen zweiten Datum $(L_r^{br})$ und der ersten Maske (($-b_r$)) und der zweiten Maske (($-b_{r+1}$)), um zwei dritte Daten $(L_r^{br+1}, R_r^{br+1})$ zu produzieren,
• Umsetzen einer folgenden Chiffrierrunde, die mithilfe des zweiten maskierten Rundenschlüssels ($k_{r+1}'$) auf die beiden dritten Daten angewendet wird.

**10.** Chipkarte, eine Chiffrier- oder Dechiffriervorrichtung (1) nach dem vorstehenden Anspruch umfassend.

**Claims**

**1.** Method for encrypting or decrypting a data block (B) from a secret key (K), wherein the method comprises steps of:

- generating (206) a first round key ($k_r$) dependent on the secret key (K),
- calculating (208) the exclusive disjunction of the first round key ($k_r$) and of a first mask (($-b_r$)), so as to produce a first masked key ($k_r$'),
- executing an encryption round applied to two first data $(L_{r-1}^{b_r}, R_{r-1}^{b_r})$ dependent on the data block (B), by means of the first masked round key ($k_r$') so as to produce two second data, $(L_r^{b_r}, R_r^{b_r})$,
- after the step (208) producing the first masked key $(k_r')$, generating (206) a second round key ($k_{r+1}$) dependent on the secret key (K),
- calculating (208) the exclusive disjunction of the second round key ($k_{r+1}$) and of a second mask (($-b_{r+1}$)), so as to produce a second masked key ($k_{r+1}$'),

the method being **characterized by** the steps of:

- selecting (100) of the first mask (($-b_r$)) and of the second mask (($-b_{r+1}$)) from a mask of bits all at one and a mask of all zero bits,
- calculating (306) the exclusive disjunction of one of the second data $(R_r^{b_r})$ and of the first mask (($-b_r$)) and of the second mask (($-b_{r+1}$)), and calculating the exclusive disjunction of the other second data $(L_r^{b_r})$ and of the first mask (($-b_r$)) and of the second mask (($-b_{r+1}$)), so as to produce two third data, $(L_r^{b_{r+1}}, R_r^{b_{r+1}})$,
- executing a following encryption round applied to two third data $(L_r^{b_{r+1}}, R_r^{b_{r+1}})$ by means of the second masked round key ($k_{r+1}$').

**2.** Method according to the preceding claim, comprising generating (200) a plurality of round keys, and a plurality (300) of successive encryption rounds, wherein a round key is generated before each encryption round, and wherein:

- for each generated round key,

  ○ a mask associated with the round key is selected (100), and
  ○ the exclusive disjunction of the round key and of the associated mask is calculated (208) so as to produce a masked key,

- the correction (306) is performed between each pair of successive encryption rounds.

**3.** Method according to the preceding claim, wherein selecting (100) each mask is performed before the plurality (300) of encryption rounds and/or before the generation (200) of the plurality of round keys.

**4.** Method according to one of the preceding claims, wherein the selection (100) is random.

**5.** Method according to one of the preceding claims, wherein the selection (100) is adapted so that the mask of bits all at one and the mask of all zero bits are selected in an equiprobable manner.

**6.** Method according to one of the preceding claims, comprising generating a number having a plurality of bits, each round key being associated with one of the bits, and wherein the mask selected to mask a round key is:

- the mask of bits all at one if the bit associated with the round key has a first value,
- the mask of all zero bits if the bit associated with the round key has a second value different from the first value.

7. Method according to one of the preceding claims, wherein the encryption round applied to the two first data comprises:

 • applying (302) an encryption function (f) to one of the two first data by means of the first masked round key $(k'_r)$ so as to produce an intermediate datum, wherein the first datum also forms one of the two second data,
 • calculating (304) an exclusive disjunction of the intermediate datum and of the other first datum so as to produce the other second datum.

8. Computer program product comprising program code instructions for execution of the steps of the method according to one of the preceding claims, when this program is executed by at least one processor (10).

9. Device (1) for encryption or decryption of a data block (B) from a secret key (K), the device (1) at least one processor (10) configured for:

 • generating (206) a first round key ($k_r$) dependent on the secret key (K),
 • calculating (208) the exclusive disjunction of the first round key ($k_r$) and of a first mask (($-b_r$)), so as to produce a first masked key ($k_r$'),
 • executing an encryption round applied to two first data $(L_{r-1}^{b_r}, R_{r-1}^{b_r})$, dependent on the data block (B), by means of the first masked round key $k_r'$ so as to produce two second data $(L_r^{b_r}, R_r^{b_r})$,
 • after producing the first masked key $k_r'$, generate (206) a second round key ($k_{r+1}$) dependent on the secret key (K),
 • calculating (208) the exclusive disjunction of the second round key ($k_{r+1}$) and of a second mask (($-b_{r+1}$)), so as to produce a second masked key ($k_{r+1}$'),

 the device being **characterized in that** the processor (10) is furthermore configured to:

 • selecting (100) the first mask (($-b_r$)) and the second mask (($-b_{r+1}$)) from a mask of bits all at one and a mask of all zero bits,
 • calculating (306) the exclusive disjunction of one of the second data $(R_r^{b_r})$ and of the first mask (($-b_r$)) and of the second mask (($-b_{r+1}$)), and calculating the exclusive disjunction of the other second data $(L_r^{b_r})$ and of the first mask (($-b_r$)) and of the second mask (($-b_{r+1}$)), so as to produce two third data, $(L_r^{b_{r+1}}, R_r^{b_{r+1}})$,
 • executing a following encryption round applied to the two third data $L_r^{b_{r+1}}, R_r^{b_{r+1}}$ by means of the second masked round key ($k_{r+1}$').

10. Smart card comprising an encryption or decryption device (1) according to the preceding claim.

**FIG. 1**

1

X, L, R

10     12

B           K

100

génération de masques

300         200

| Tours de chiffrement | Cadencement de clés de tours |
|---|---|

B'

**FIG. 2**

$K$

200

/ 56-bit    202

PC1

28-bit /        / 28-bit

204

<<        <<

$k_1' = k_1 \oplus (-b_1)$

$k_1$

208        PC2    206

204

<<        <<

$k_2' = k_2 \oplus (-b_2)$

$k_2$

208        PC2    206

$\vdots$

$\vdots$        $\vdots$

$k_r' = k_r \oplus (-b_r)$

$k_r$

208        PC2    206

**FIG. 3**

300                                                                              100

$$k_{r-1} \oplus (-b_{r-1})$$                                                      206

PC2

$$L_{r-1}^{b_{r-1}} \qquad R_{r-1}^{b_{r-1}}$$

306  $$\oplus (-b_{r-1}) \oplus (-b_r)$$

$$L_{r-1}^{b_r} \qquad R_{r-1}^{b_r}$$

<<                <<

$$k_r \oplus (-b_r)$$                                                              206

304      302   f                                                                    PC2

$$L_r^{b_r} \qquad R_r^{b_r}$$

306  $$\oplus (-b_r) \oplus (-b_{r+1})$$

<<                <<

$$L_r^{b_{r+1}} \qquad R_r^{b_{r+1}}$$

$$k_{r+1} \oplus (-b_{r+1})$$                                                       206

304      302   f                                                                    PC2

**FIG. 4**

**EP 3 300 292 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110103584 A
- EP 2675103 A